# EUROPEAN PATENT SPECIFICATION

(11) **EP 3 925 587 B1**
(45) Date of publication and mention of the grant of the patent: **23.10.2024**
(21) Application number: 20756470.9
(22) Date of filing: 11.02.2020
(51) Int. Cl.: A61H 1/02, A61H 1/00, B25J 11/00

(54) **SITTING-TYPE WALKING REHABILITATION ROBOT HAVING IMPROVED ENTERING FEATURES**
SITZROBOTER ZUR GEHREHABILITATION MIT VERBESSERTEN EINGANGSMERKMALEN
ROBOT DE RÉÉDUCATION À LA MARCHE DE TYPE À SIÈGE AYANT DES CARACTÉRISTIQUES D'ENTRÉE AMÉLIORÉES

(30) Priority: 11.02.2019 KR 20190015451
(43) Date of publication of application: 22.12.2021
(73) Proprietor: Curexo, Inc., Seoul 05814 (KR)
(72) Inventor: KIM, Young Hwan, Osan-si Gyeonggi-do 18132 (KR); CHOI, Hyung Jun, Gwangmyeong-si Gyeonggi-do 14247 (KR)
(74) Representative: Zimmermann, Tankred Klaus
(86) International application number: PCT/KR2020/001875
(87) International publication number: WO 2020/166924

(56) References cited:
- JP-A- 2012 213 616
- JP-A- 2016 158 968
- KR-A- 20130 096 878
- KR-A- 20130 096 878
- KR-A- 20150 078 399
- KR-B1- 101 623 686
- KR-B1- 101 623 686
- US-A1- 2009 298 653

## Description

### [TECHNICAL FIELD]

The disclosure relates to a seating-type gait rehabilitation robot improved in entry characteristics, and more particularly to a seating-type gait rehabilitation robot improved in entry characteristics, of which a structure is concise and simple, and in which a footrest on which a trainee can put his/her foot has the minimum height to allow the trainee to easily enter and readily use the robot without any separate entry means for entry of the trainee and is placed at an entry side for the trainee to raise a gait training effect and reduce a collision risk.

### [BACKGROUND ART]

In general, a gait rehabilitation robot refers to a treatment robot for the rehabilitation treatment or the like, and has been used for spinal cord injury include paraplegia, cerebral stroke, traumatic brain injury, amyotrophy, parkinsonism, multiple sclerosis, cerebral palsy, training for standing sense improvement, etc.

Such a gait rehabilitation robot is generally based on a method of using an overhead harness-type load traction device to support the weight of a trainee, in which an overhead harness has advantages of pulling a load in a completely upward direction, and relatively freely tying a subject to be pulled in other directions than the direction of gravity due to the flexibility of the harness.

However, there are disadvantages that it takes too much time when a patient puts on the overhead harness, it is inconvenient to use the overhead harness because the patient cannot wear the overhead harness by him/herself without help of one or two separate medical personnel, and it is impossible to use the overhead harness for a long time because pain is caused by a load focused on a body part that is unsuitable for long-time support of the load during wear. In particular, the overhead harness-type gait rehabilitation robot has limitations that it is not installable in a low-ceilinged structure because its overall height in an upper direction of the harness is so high that a patient can be suspended.

As a method of solving such problems, there has been proposed Korean Patent No. 10-1623686 filed by the same applicant and titled `A SEATING-TYPE ROBOT FOR GAIT TRAINER APPARATUS.'

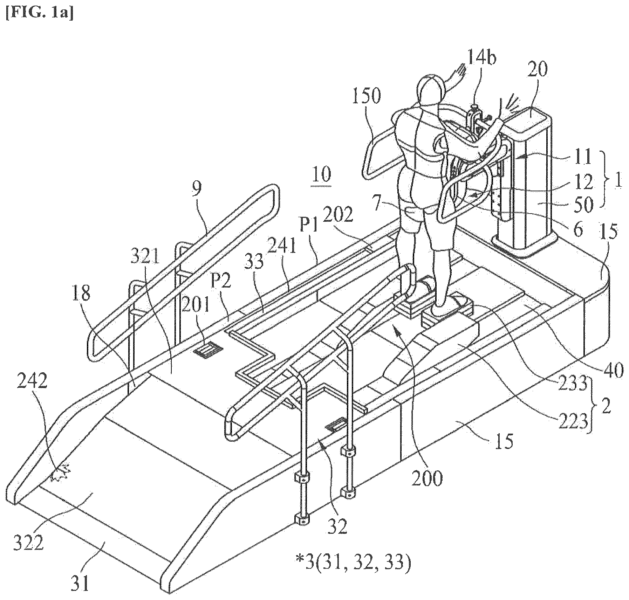

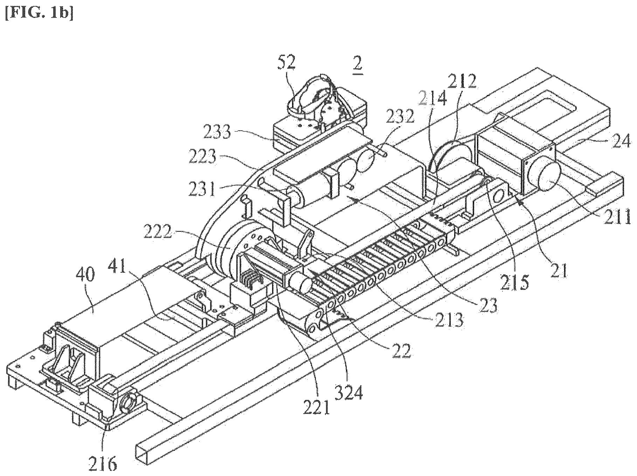

The seating-type gait rehabilitation robot 10 includes a weight supporting part 1, a walk actuating part 2, and a trainee transfer part 3 as shown in FIGS. 1a and 1b.

The weight supporting part 1 includes an elevating part 11 installed inside a vertical support 50 and connected to an elevating frame, a connection frame 6 connected to the elevating frame, and a seating part 12 including a saddle 7 or the like installed in the connection frame 6.

The walk actuating part 2 includes a pair of weight supporting links 223 installed in parallel having a predetermined length at rear opposite sides of the weight supporting part 1 so that a trainee can undergo gait training, and a uniaxial actuating part 21, a biaxial actuating part 22, and a triaxial actuating part 23 to actuate the weight supporting links 223 and footrests 233 according to walk tracking together with the footrests 233.

In more detail, the uniaxial actuating part 21 transfers actuation of a uniaxial motor 211 to a uniaxial actuating table 213 via a uniaxial speed reducer 212, a uniaxial actuating pulley 215, a uniaxial straight-actuating belt 214, etc., thereby making the weight supporting links 223 rectilinearly move forward and backward together with the footrest 233.

The biaxial actuating part 22 makes a front side of the weight supporting links 223 rotate to move up and down together with the footrest 233 by actuation of the biaxial motor 221 transferred via the weight supporting links 223 through a speed reducer 222.

The triaxial actuating part 23 includes a triaxial motor 231 installed in an internal middle of the weight supporting links 223, an orthogonal triaxial speed reducer 232 connected to the triaxial motor 231 and having an output terminal connected to a lateral side of the footrest 233, and the footrest 233, in which the lateral side of the footrest 233 is connected to the triaxial speed reducer 232 so that the footrest 233 can relatively rotate with respect to the weight supporting link 223.

The trainee transfer part 3 includes a sloping part 31 installed in a rear end of the walk actuating part 2, a position changing part 32 installed on the walk actuating part 2, and a guide part 33 guiding movement of the position changing part 32.

Further, the walk actuating part 2 is attached with an external cover 15 to cover the walk actuating part 2 at left/right sides and a front side thereof, the weight supporting part 1 is installed standing in the front side of the walk actuating part 2, and the trainee transfer part 3 is installed at a back side of the walk actuating part 2 so as to transfer a trainee.

In the foregoing seating-type gait rehabilitation robot 10, there is no need of putting the harness on a trainee because the foot rest 233 moves along the walk tracking by the wall actuating part 2 when the trainee puts his/her foot on the footrest 233 while seating on the saddle 7 of the seating part 12, thereby solving various problems of the foregoing harness-type gait rehabilitation robot. However, the foregoing seating-type gait rehabilitation robot 10 has various shortcomings as follows.

First, in the conventional seating-type gait rehabilitation robot 10, as shown in FIG. 1b, when the actuation of the uniaxial motor 211 is transferred to the uniaxial actuating table 213 via the uniaxial speed reducer 212, the uniaxial actuating pulley 215, the uniaxial rectilinear actuating belt 214, etc., the uniaxial actuating table 213 rectilinearly moves forward and backward as guided by an LM guide unit or the like translatory guide device placed under the uniaxial actuating table 213. In this case, the LM guide unit (not shown) is supported by a floor support frame including a quadrangular rod or the like rolled steel material, and a board material or the like.

As described above, the overall height of the installation position is increased by the height of the LM guide unit (not shown) because the uniaxial actuating part 21 is provided on the top of the LM guide unit (not shown) installed on a floor for the rectilinear movement of the uniaxial actuating table 213, and therefore the overall height of the weight supporting links 223 and the footrest 233 installed in the uniaxial actuating table 213 is also increased, thereby having a disadvantage of separately requiring the trainee transfer part 3 to move the trainee close to the footrest 233 as shown in FIG. 1a.

Further, the trainee transfer part 3 is formed with the sloping part 31 for movement of a wheelchair-seated trainee as shown in FIG. 1, and is thus long in forward and backward directions, thereby increasing the length of the seating-type gait rehabilitation robot by several meters or more. Therefore, there are disadvantages that the gait rehabilitation robot is not compactly manufactured and increases an occupied area to thereby make it difficult to be installed in a medical treatment center having a limited space.

In particular, there are disadvantages that it is inconvenient for a wheelchair-seated trainee to use the conventional seating-type gait rehabilitation robot 10 because the trainee cannot move along the sloping trainee transfer part 3 by him/herself and needs a medical staffs help to undergo training, and therefore incurred labor costs increase training costs.

Further, the conventional seating-type gait rehabilitation robot 10 has disadvantages that the manufacture of the trainee transfer part 3 is additionally needed, the trainee transfer part 3 is so bulky that a lot of materials such as rolled steel or the like are consumed, and manufacturing costs are increased due to manufacturing-personnel expenses or the like.

Further, the conventional seating-type gait rehabilitation robot 10 has disadvantages that the footrest 233 on which a trainee puts his/her foot is disposed biased forward and thus highly likely to collide with a front structure during training, thereby lowering effects on gait rehabilitation training as tracking of footrest exercise is restricted due to such disposition limitations.

Further, the conventional seating-type gait rehabilitation robot 10 has disadvantages that it is difficult and hard for a patient who cannot walk with a normal gait to enter because the footrest 233 is biased forward and therefore an entry distance for entry is relatively long when it is taken into account that a trainee enters from the back.

Besides, the conventional seating-type gait rehabilitation robot 10 has disadvantages that its structure is complicated and foreign materials are easily accumulated because a seal belt 40 or the like is required to prevent aesthetic deficits and accidents due to the exposure of the motor, the speed reducer, etc. of the walk actuating part 2 as shown in FIG. 1b, thereby causing a breakdown and making it difficult to maintain cleanness. KR 101 623 686 B1 discloses a seat-type rehabilitation robot for walking. KR 2013 0 096 878 A discloses a gait rehabilitation device that allows a user to do gait rehabilitation exercise without the other's help using a drawing unit. US 2009/ 298 653 A1 discloses a powered mobile lifting, gait training and omnidirectional rolling apparatus that is for personal use by persons with lower body disabilities for assisted walking in upright position in desired direction indoor or outdoor.

### [DISCLOSURE]

### [TECHNICAL PROBLEM]

Accordingly, the disclosure is proposed based on the foregoing content, and an aspect of the disclosure is to provide a seating-type gait rehabilitation robot improved in entry characteristics, of which a structure is concise and simple, and in which a footrest on which a trainee can put his/her foot has the minimum height to allow the trainee to easily enter and readily use the robot without any separate entry means for entry of the trainee

Another aspect of the disclosure is to provide a seating-type gait rehabilitation robot improved in entry characteristics, in which a footrest is placed at an entry side for the trainee, so that a walking track can be freely designed, thereby raising a gait training effect, reducing a collision risk, and making it more convenient and easier for the trainee to enter and use.

### [TECHNICAL SOLUTION]

According to an aspect of the disclosure, there is provided a seating-type gait rehabilitation robot improved in entry characteristics, the seating-type gait rehabilitation robot including: a weight supporter including an elevator connected to a vertical supporter and moving up and down, and a seat connected to the elevator; and a pair of walk actuators disposed at opposite sides with respect to the weight supporter for gait training of a trainee, each of the pair of walk actuators including a footrest, a footrest supporter to which the footrest is connected, and a footrest actuator configured to actuate the footrest and the footrest supporter, wherein the footrest actuator comprises a supporter rotation actuator configured to perform rotating movement of the footrest supporter, a footrest rotation actuator configured to perform rotational movement of the footrest, and a translatory actuator, the translatory actuator including a transfer mechanism to which the footrest supporter is connected so that the footrest actuator can make translatory movement of the footrest supporter, and a transfer actuator configured to apply an actuating force to the transfer mechanism, and the seating-type gait rehabilitation robot further includes an actuator hanging member configured to hang and support the transfer mechanism, wherein the hanging member comprises a lateral wall, wherein the transfer mechanism comprises a plurality of guide rails coupled to an inner side of the lateral wall as spaced apart up and down from each other and installed as hung in a translatory direction, a slider connected to the plurality of guide rails and configured to move by the actuating force applied from the transfer actuator, and a transfer base on which the slider and the footrest supporter are installed, wherein the transfer base comprises a vertical base to which the slider is coupled, and a horizontal base disposed perpendicularly to a lower portion of the vertical base, the footrest supporter is rotatably coupled to the supporter rotation actuator installed on the horizontal base, and wherein the footrest supporter comprises a first end connected to the transfer mechanism and a second end to be mounted with the footrest, and the first end of the footrest supporter coupled with the transfer mechanism is placed inside an entry space so that the footrest is disposed toward an entrance of the entry space formed between the actuator hanging members.

Preferably, the transfer actuator may include: a transfer belt including opposite ends fastened to the transfer base, and installed to be movable along a disposition path of the guide rail; a transfer motor configured to generate and provide an actuating force for movement of the transfer belt; a transferer speed reducer connected to a motor shaft of the transfer motor and performing a speed-reducing function; a transferer driving pulley installed in an output terminal of the transferer speed reducer and engaging with a first side of the transfer belt; and a transferrer driven pulley disposed spaced apart from the transferer driving pulley and engaging with a second side of the transfer belt.

Meanwhile, the supporter rotation actuator may include a supporter rotation motor, and a supporter speed reducer configured to reduce rotational speed of the supporter rotation motor, and the footrest supporter may include a supporting link connected to an output terminal of the supporter speed reducer, and the horizontal base is formed with a rotation hole in which a connector of the supporting link is rotatable as accommodated.

Further, the seating-type gait rehabilitation robot improved in entry characteristics may further include: a main base member in which the actuator hanging member is installed; and a cover member installed outside the actuator hanging member.

### [ADVANTAGEOUS EFFECTS]

As described above, In the seating-type gait rehabilitation robot improved in entry characteristics according to the disclosure, the walk actuator is installed as hung onto the actuator hanging member placed at the lateral side, and therefore the entry space for allowing a wheelchair or a trainee to enter is secured between both the actuator hanging members, so that the trainee can easily enter the robot while sitting on the wheelchair even though the conventional entry means for the entry of the trainee is not additionally provided or installed, thereby having an effect on use convenience and making it easier for the trainee to get on the gait rehabilitation robot because the footrest on which a trainee puts his/her foot can have the minimum height.

In particular, in the seating-type gait rehabilitation robot improved in entry characteristics according to the disclosure, the walk actuator is installed as hung onto the actuator hanging member placed at the lateral side, it is possible to dispose the footrest of the walk actuator at the height similar to the footrest height of the wheelchair, and the footrest supporter is connected to the transfer mechanism of the translatory actuator placed in a deep inner position of the entry space so that the position of the footrest of the walk actuator and the position of the footrest of the entering wheelchair can get closer to each other, thereby having advantages that help of medical personnel is minimized during entry and a patient who has a low degree of disability can sit and undergo training without the help of the medical personnel.

Further, in the seating-type gait rehabilitation robot improved in entry characteristics according to the disclosure, the footrest is positioned at an entry side for a trainee, i.e. an outside and therefore an enough distance for the movement of the walk actuator is secured in an inward direction. Therefore, accidents are prevented because risks of collision with a front structure during training are reduced, and gait-rehabilitation training effects are enhanced because a tracking range of footrest movement is sufficiently secured.

Further, in the seating-type gait rehabilitation robot improved in entry characteristics according to the disclosure, the trainee transferer needed for a trainee to enter the conventional seating-type gait rehabilitation robot is not necessary, thereby having advantages that the help of medical personnel or the like is minimized and training costs are reduced by improvement in use convenience. Further, the seating-type gait rehabilitation robot has a concise and simple structure and is decreased overall volume and weight, thereby having advantages of remarkably reducing manufacturing costs, installation costs, and maintenance costs.

Besides, the walk actuator according to the disclosure is installed as hung onto the actuator hanging member placed at the lateral side, and therefore it is possible to remove a seal belt and the like complicated devices required to cover the conventional walk actuating part, thereby making a more concise and simpler structure, reducing causes of a breakdown, and easily carrying out maintenance.

### [DESCRIPTION OF DRAWINGS]

FIG. 1a is a perspective view illustrating an overall structure of a conventional seating-type gait rehabilitation robot,
FIG. 1b is a partially enlarged perspective view illustrating internal parts of a walk actuator by removing an upper component from the conventional seating-type gait rehabilitation robot,
FIG. 2 is a perspective view for illustrating a seating-type gait rehabilitation robot improved in entry characteristics according to a first embodiment of the disclosure,
FIG. 3 is a perspective view for illustrating the seating-type gait rehabilitation robot improved in entry characteristics according to the first embodiment of the disclosure, from which some components are separated,
FIGS. 4a and 4b are perspective views for illustrating major parts of the seating-type gait rehabilitation robot improved in entry characteristics according to the first embodiment of the disclosure,
FIG. 5 is an exploded perspective view for illustrating the major parts of the seating-type gait rehabilitation robot improved in entry characteristics according to the first embodiment of the disclosure, and
FIGS. 6a and 6b are perspective views for describing use states of the seating-type gait rehabilitation robot improved in entry characteristics according to the first embodiment of the disclosure.

### [MODE FOR INVENTION]

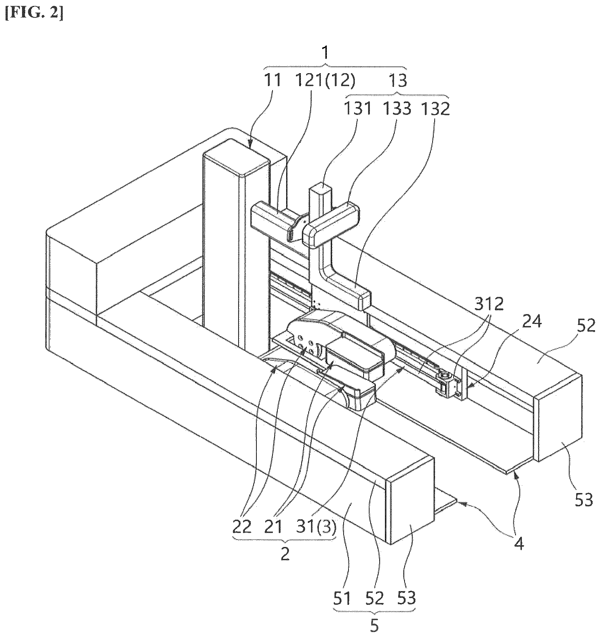

Below, embodiments of the disclosure will be described in detail with reference to the accompanying drawings of FIGS. 2 to 6b, in which like numerals refer to like elements throughout FIGS. 2 to 6b. Meanwhile, illustrations and detailed descriptions about the elements and their operations and effects, which will be easily understood based on general technology by a person having an ordinary skill in the art, in the accompanying drawings will be simplified or omitted, while illustrating only parts relevant to the disclosure.

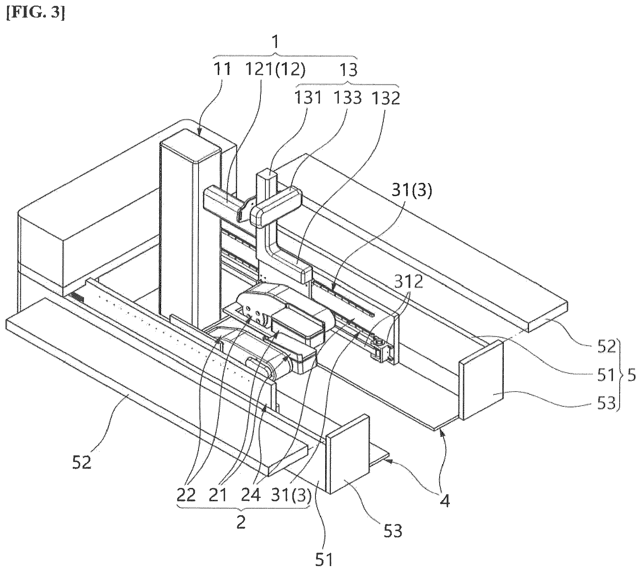

FIG. 2 is a perspective view for illustrating a seating-type gait rehabilitation robot improved in entry characteristics according to a first embodiment of the disclosure, and FIG. 3 is a perspective view for illustrating the seating-type gait rehabilitation robot improved in entry characteristics according to the first embodiment of the disclosure, from which some components are separated.

Referring to FIGS. 2 and 3, the seating-type gait rehabilitation robot improved in entry characteristics according to the first embodiment of the disclosure includes a weight supporter 1 supporting the weight of a trainee such as a patient, etc. who needs gait-rehabilitation training; and walk actuators 2 symmetrically placed at opposite sides with respect to the weight supporter 1 so that a trainee getting on the weight supporter 1 can substantially undergo gait-rehabilitation training, in which a footrest 21 of the walk actuator 2 on which the trainee puts his/her foot has the minimum height from a floor, thereby allowing the trainee to easily enter without any separate entry means for entry of the trainee.

To this end, in the seating-type gait rehabilitation robot improved in entry characteristics according to the first embodiment of the disclosure, a translatory actuator 31 of the walk actuator 2 is not installed in a lower portion but installed hung on a lateral portion so as to lower a home-position height of the footrest 21. Hereinafter, detailed description will be made focusing on the walk actuator 2, which is distinctive as compared with that of a conventional seating-type gait rehabilitation robot, while simplifying or omitting descriptions about the weight supporter 1, a controller (not shown) for controlling actuation of the weight supporter 1 and the walk actuator 2, a display (not shown) for displaying an actuating state, and the like elements.

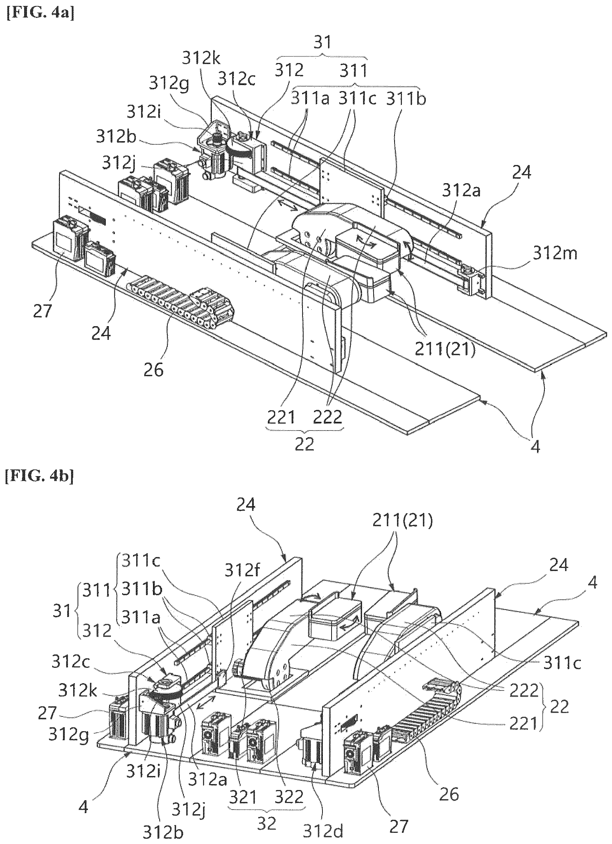

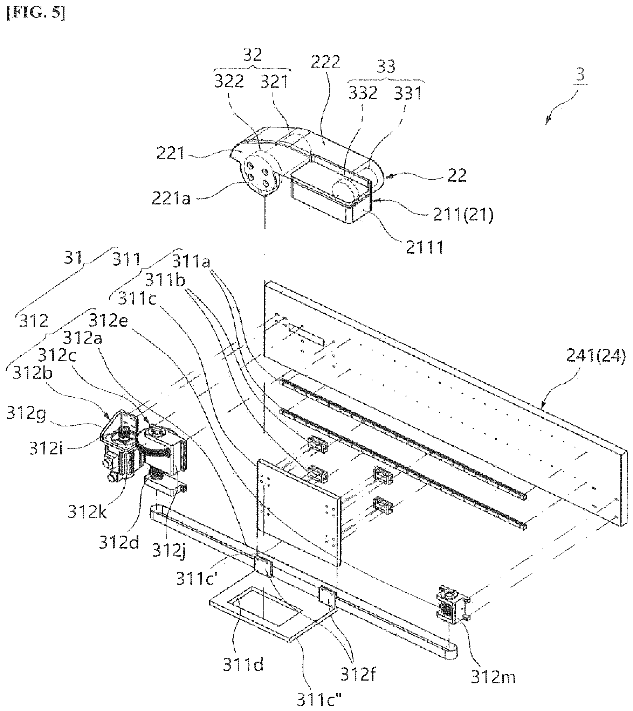

FIGS. 4a and 4b are perspective views for illustrating major parts of the seating-type gait rehabilitation robot improved in entry characteristics according to the first embodiment of the disclosure, in which FIG. 4a shows the parts as viewed from the front (in an entry direction of a trainee), and FIG. 4b shows the parts as viewed from the back (in an opposite direction to the entry direction of the trainee. FIG. 5 is an exploded perspective view for illustrating the major parts of the seating-type gait rehabilitation robot improved in entry characteristics according to the first embodiment of the disclosure.

Referring to FIGS. 4a to 5, the weight supporter 1 includes a vertical supporter 11 functioning as a pillar; an elevator 12 including an elevating frame 121 connected to the vertical supporter 11, an elevation device (not shown) placed inside the vertical supporter 11 and connected to the elevating frame 121, etc.; and a seat 13 including a connection frame 131 connected to the elevating frame 121, a saddle 132 installed in the connection frame 131, etc.

Further, the seat 13 is installed with a chest supporter 133 to support a chest of a trainee, and a handle (not shown) to be gripped by a trainee.

The elevation device (not shown) may be variously configured without limitations as long as it can move the elevator 12 up and down while a trainee is sitting on the seat 13. However, the elevation device in this embodiment may be configured to include a guide rail (not shown) longitudinally installed inside the vertical supporter, an LM guide module (not shown) with a slider (not shown) moving on the guide rail, a servo motor (not shown) for generating and applying actuating force to move the slider (not shown), and a ball screw (not shown) for moving the slider up and down while rotating as connected to the servo motor, like those shown in the mechanism of the background art.

Meanwhile, the walk actuator 2 includes one pair of footrests 21 on which a trainee puts his/her left and right feet to undergo gait training, one pair of footrest supporters 22 to which the footrests 21 are connected, and a footrest actuator 3 for actuating the footrest supporter 22.

The footrest 21 allows a trainee to put his/her foot thereon to thereby smoothly under to gait-rehabilitation training. The footrest 21 may be variously configured without limitations of its shape or structure as long as it is easy to separate a trainee's foot from the footrest 21 when the trainee goes into spasm or the gait rehabilitation robot malfunctions.

For example, the footrest 21 is installed with a footrest body 211 in which a plurality of footrest members 2111 shaped like an approximately rectangular plate are detachably provided; a foot locker (not shown) provided as a locking band or an auxiliary shoe to lock a trainee's foot to the footrest body 211; a footrest member binder (not shown) such as an electromagnet installed inside the footrest body so that the plurality of footrest members 2111 are bound together and separated from each other; a foot sensor (not shown) configured to sense the conditions of the trainee such as a patient's spasm or the like by detecting the pressure or force applied to the footrest body 211; etc.

Here, the foot sensor may employ load cells representatively described in the background art, but may be selected among various pressure sensors such as a capacitive pressure sensor, a strain gauge pressure sensor, a potentiometric pressure sensor, a piezoelectric pressure sensor, a silicon pressure sensor, etc.

When a force stronger than a predetermined level is applied to the footrest due to a patient's spasm, the malfunction of the gait rehabilitation robot or the like emergency, the foot sensor makes the foot locker release a binding force of the footrest member binder (i.e., a magnetic force of an electromagnet applied to the footrest member), which binds the footrest member 2111 under control of the controller, thereby preventing accidents.

Meanwhile, the footrest supporter 22 is shaped like an arm having a first end is connected to a transfer mechanism 311 (to be described later), and a second end to which the footrest 21 is mounted, and includes a supporting link 221 connected to an output terminal of a supporter speed reducer 322 (to be described later), and a supporter housing 222 coupled to the supporting link 221.

Further, it is important that the footrest supporter 22 is coupled to make a coupling portion between the supporting link 221 of the footrest supporter 22 and the transfer mechanism 311 be close to the weight supporter 1, i.e., the inner side of the entry space so that a trainee can easily enter an entry space formed between the left and right actuator hanging members 24.

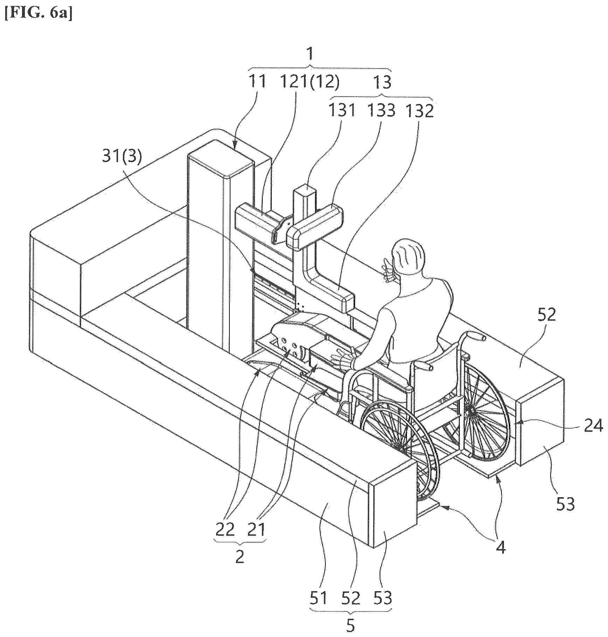

Like this, when a connector 221a of the supporting link 221 of the footrest supporter 22 is coupled to the inner side of the entry space, the footrest 21 is naturally disposed toward the entrance of the entry space formed between the left and right actuator hanging members 24 and is thus convenient for a trainee in a wheelchair to position his/her foot in the proximity of the footrest 21 as shown in FIG. 6a.

Meanwhile, the footrest actuator 3 includes a translatory actuator 31 for actuating the footrest supporter 22 to move frontward and backward in a translational direction, a supporter rotation actuator 32 for actuating the footrest supporter 22 to rotate, and a footrest rotation actuator 33 for actuating the footrest 21 to rotate, in which an actuator hanging member 24 is provided so that the translatory actuator 31 can be not put on a structure installed on the floor but installed hung on the lateral portion.

The translatory actuator 31 refers to an actuator for actuating the footrest supporter 22 to move frontward and backward, and includes a transfer mechanism 311 to which the footrest supporter 22 is connected, and a transfer actuator 312 which applies an actuating force to the transfer mechanism 311.

Further, the transfer mechanism 311 is installed at an inner lateral side of the actuator hanging member 24 to lower the disposition height of the footrest supporter 22 so that the footrest 21 can have the minimum home-position height.

In more detail, the transfer mechanism 311, as shown in FIGS. 4a to 5, includes a guide rail 311a installed in a hanging form along a translatory direction, a slider 311b connected to the guide rail 311a, and a transfer base 311 c on which the slider 311b and the footrest supporter 22 are installed. Here, the guide rail 311a and the slider 311b may be selected and used without any specific limitations as long as they are a translatory mechanism guide means for effectively guiding translational movement. In this embodiment, the guide rail 311a and the slider 311b are configured employing a translatory mechanism typically called the LM guide module.

The guide rail 311a and the slider 311b are provided in plural to guide the movement of the transfer base 311c while stably supporting the load of the footrest supporter 22 including the footrest 21 supporting a trainee. The plurality of guide rails 311a are mounted as spaced apart up and down and hung onto the inner side of the actuator hanging member 24, and the sliders 311b respectively corresponding to these guide rails are mounted to the transfer base 311c.

The transfer base 311c includes a vertical base 311c' to which the slider 311b coupled to the guide rail 311a is mounted, and a horizontal base 311c" coupled to a lower portion of the vertical base 311c'. Further, the transfer base 311c refers to an 'L'-shaped movable plate where the horizontal base 311c" shaped like a plate is formed perpendicularly to the vertical base 311c' shaped like a plate. The horizontal base 311c" is perforated and formed with a rotation hole 311d in which the connector 221a of the supporting link 221 is rotatable as accommodated.

Further, the actuator hanging members 24 are provided at the left and right sides with respect to the weight supporter 1 disposed at the center, so that the walk actuators 2 can be installed. The actuator handing member 24 includes a lateral wall 241 shaped like a rectangular plate to which the guide rail 311a is coupled.

When the actuator hanging member 24 includes the lateral wall 241 shaped like a plate as described above, there may be additionally provided a main base member 4 installed on the floor so that the lateral wall 241 can be locked and stably keep a standing state, and a cover member 5 installed outside the lateral wall 241.

Here, the cover member 5 includes a lateral cover plate 51 disposed in parallel with the lateral wall 241, an upper cover plate 52 installed on the lateral cover plate 51, and a connection cover plate 53 installed between the lateral cover plate 51 and the upper cover plate 52.

Further, the cover member 5 is also installed in a front direction of the weight supporter 1, and internally provided with a power supply for supplying power the weight supporter 1, the walk actuator 2 and the like, etc.

Meanwhile, the transfer actuator 312 includes a band-shaped transfer belt 312a of which both ends are fastened to the vertical base 311c' of the transfer base 311c by fastening brackets 312f and installed to move along an arranged path of the guide rail 311a, a transfer motor 312b configured to generate and provide an actuating force for the movement of the transfer belt 312b, a transferer speed reducer 312c connected to a motor shaft of the transfer motor 312b and performing a speed-reducing function, a transferer driving pulley 312d installed in the output terminal of the transferer speed reducer 312c and engaging with a first side of the transfer belt 312a, and a transferrer driven pulley 312e disposed spaced apart from the transferer driving pulley 312d and engaging with a second side of the transfer belt.

Further, the transfer motor 312b is mounted to the actuator hanging member 24 by a coupling bracket 312g, and is installed with a motor electric pulley 312i at the motor shaft. The transferer speed reducer 312c is mounted to the actuator hanging member 24 by a coupling bracket 312j, and is installed with a speed-reducer electric pulley 312k with which a second side of a belt (not shown) having a first side engaging with the motor electric pulley 312i is engaged, and the transferer driving pulley 312d at the output terminal thereof. The transferrer driven pulley 312e is rotatably installed to a coupling bracket 312m mounted to the actuator hanging member 24.

Further, the transfer actuator 312 refers to an element configured to apply an actuating force for movement of the slider (not shown). Besides the belt driving method shown in FIG. 5, the transfer actuator 312 may be achieved by a servo motor (not shown) mounted to the guide rail and generating an actuating force, and a ball screw (not shown) rotating as connected to the servo motor and moving the slider forward and backward, detailed illustrations of which will be omitted in the drawings.

Meanwhile, the supporter rotation actuator 32 for the rotation of the footrest supporter 22 in the footrest actuator 3 refers to an actuator for forward and reverse angular motion to carry out a similar action as if a foot is raised or lowered during walking as shown in FIGS. 4b and 5, and includes a supporter rotation motor 321 mounted to the horizontal base 311c", and the supporter speed reducer 32 installed in the output terminal of the supporter rotation motor 32 and reducing a rotation force.

The supporter speed reducer 322 includes an input side installed in the output terminal of the supporter rotation motor 321, and an output side installed in the connector 221a of the supporting link 221 of the footrest supporter 22, thereby transferring rotary power reduced by a given deceleration ratio.

Meanwhile, the footrest rotation actuator 33 for the rotation of the footrest 21 in the footrest actuator 3 refers to an actuator for forward and reverse rotation of the footrest to carry out a similar action as if a heel portion is first on the ground and a front portion is then on the ground during walking as shown in FIG. 5, and includes a footrest rotation motor 331 installed at a free end of the supporting link 221, and a footrest speed reducer 332 installed at the output terminal of the footrest rotation motor 331 and reducing a rotation speed. Here, the footrest speed reducer 332 includes a first side connected to the output terminal of the footrest rotation motor 331, and a second side connected to the lateral side of the footrest 21.

Meanwhile, in FIGS. 4a and 4b, the reference numeral of '26' indicates a cableveyor configured to move together with various cables for supplying power to the walk actuator 2 or the like while accommodating and protecting the cables, and the reference numeral of '27' indicates a motor driver configured to drive the motors 312b, 321, 331 of the walk actuator 2.

Below, the operations of the seating-type gait rehabilitation robot improved in entry characteristics according to the first embodiment of the disclosure will be described in brief.

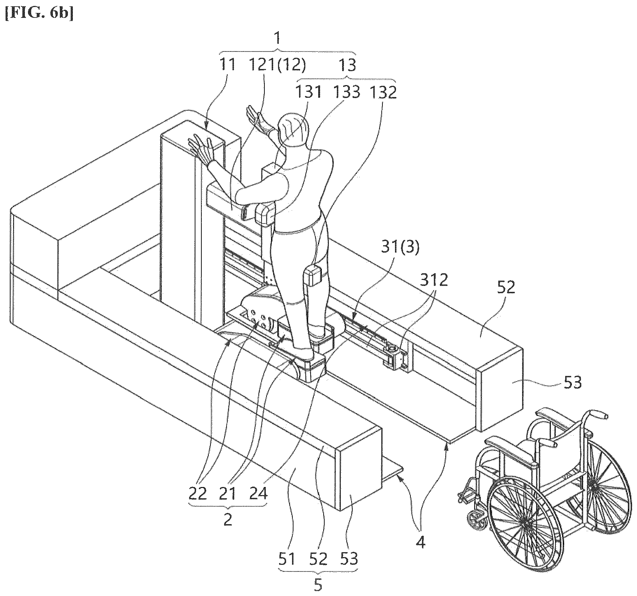

FIGS. 6a and 6b are perspective views for describing use states of the seating-type gait rehabilitation robot improved in entry characteristics according to the first embodiment of the disclosure, in which FIG. 6a shows a process that a wheelchair-seated trainee enters and FIG. 6b shows a process that the trainee undergoes training while standing on the footrest.

As shown in FIG. 6a, when a trainee who has difficulties in mobility wants to undergo gait training, the trainee moves toward the entrance of the entry space between the cover members 5 where the left and right walk actuators 2 are placed while sitting on a wheelchair, stops near the footrest 21, gets on the seat 13 so that his/her buttocks can be on the saddle 132 as shown in FIG. 6a, puts and locks his/her foot on the footrest 21 of the walk actuator 2 in the home position, and then undergoes the gait rehabilitation by the walk actuator 2 operating based on a set program.

In more detail, when a trainee gets on the seat 13 and puts his/her foot on the footrest 21 of the walk actuator 2 in position, the transfer motor 312b of the translatory actuator 31 operates to translate move the footrest supporter 22 frontward and backward in a translational direction, the supporter rotation motor 321 of the supporter rotation actuator 32 operates to rotate the footrest supporter 22, and the footrest rotation motor 331 of the footrest rotation actuator 33 operates to rotate the footrest 21, under control of the controller in respect to an input signal, thereby allowing the trainee to practice walking.

Meanwhile, the detailed operations of the supporter rotation actuator 32 and the footrest rotation actuator 33 are similar to those disclosed in the related art (Korean Patent No. 10-1623686 filed by the same applicant), and therefore only the translatory actuator 31, which is distinctive, will be further described.

In the translatory actuator 31, when the transfer motor 312b operates, the rotating force of the motor electric pulley 312i is transferred to the speed-reducer electric pulley 312k by a belt (not shown), reduced in speed by the transferer speed reducer 312c, output to the transferer driving pulley 312d, and transferred to the transfer belt 312a wound around the transferrer driven pulley 312e. Thus, when the transfer belt 312a performs a forward and reverse orbital movement, the transfer base 311c fastened to the transfer belt 312a by the fastening bracket 312f moves forward and backward, so that the footrest supporter 22 including the footrest 21 coupled to the transfer base 311c can move forward and backward.

As described above, in the seating-type gait rehabilitation robot improved in entry characteristics according to the disclosure, the translatory actuator 31 of the walk actuator 2 is not disposed on the floor but installed as hung onto the actuator hanging member 24 placed at the lateral side, and therefore the entry space for allowing a wheelchair or a trainee to enter is secured between both the actuator hanging members 24, so that the trainee can easily enter the robot while sitting on the wheelchair even though the conventional transfer part or entry means for the entry of the trainee is not additionally provided or installed, thereby having a prominent effect on use convenience.

Further, in the seating-type gait rehabilitation robot improved in entry characteristics according to the disclosure, the translatory actuator 31 of the walk actuator 2 is installed as hung onto the actuator hanging member 24, so that the footrest 21 on which a trainee puts his/her foot can have the minimum height, thereby making it easier for the trainee to get on the gait rehabilitation robot.

In particular, it is possible to dispose the footrest 21 of the walk actuator 2 at the height similar to the footrest height of the wheelchair, and the footrest supporter 22 is connected to the transfer mechanism 311 of the translatory actuator 31 placed inside the entry space so that the position of the footrest 21 of the walk actuator 2 and the position of the footrest of the entering wheelchair can get closer to each other while facing each other, thereby having advantages that help of medical personnel is minimized and a patient who has a low degree of disability can sit and undergo training without the help of the medical personnel.

Further, in the seating-type gait rehabilitation robot improved in entry characteristics according to the disclosure, the footrest 21 is positioned at an entry side for a trainee, and therefore an enough space for the movement of the walk actuator 2 is secured, thereby having advantages of preventing accidents because there are no risks of collision with a front structure during training, and enhancing gait-rehabilitation training effects because a tracking range of footrest movement is sufficiently secured.

Besides, in the seating-type gait rehabilitation robot improved in entry characteristics according to the disclosure, the trainee transferer needed for a trainee to enter the conventional seating-type gait rehabilitation robot is not necessary, thereby having advantages that the help of medical personnel or the like is minimized and training costs are reduced by improvement in use convenience. Further, the seating-type gait rehabilitation robot has a concise and simple structure and is decreased overall volume and weight, thereby having advantages of remarkably reducing manufacturing costs, installation costs, and maintenance costs.

The foregoing description is merely one embodiment for carrying out a seating-type gait rehabilitation robot improved in entry characteristics according to the disclosure, and the disclosure is not limited to the foregoing embodiment. Thus, it will be appreciated by any person having an ordinary skill in the art that the technical idea of the disclosure falls within the extent to which various changes can be made without departing from the scope of the disclosure. The invention is defined by the appended claims.

The terminology used herein is for the purpose of describing particular embodiments only and is not intended to limit the disclosure. Singular expressions include plural expressions unless the context clearly indicates otherwise. In this application, the terms "comprise" or "have" are intended to indicate that there is a feature, number, step, action, component, part, or combination thereof described in the specification, and one or more other features. It is to be understood that the disclosure does not exclude the possibility of the presence or the addition of numbers, steps, operations, components, components, or a combination thereof.

## Claims

1. A seating-type gait rehabilitation robot comprising:
a weight supporter (1) comprising an elevator (12) connected to a vertical supporter (11) and moving up and down; and
a pair of walk actuators (2) disposed at opposite sides with respect to the weight supporter (1) for gait training of a trainee, each of the pair of walk actuators (2) comprising a footrest (21), a footrest supporter (22) to which the footrest (21) is connected, and a footrest actuator (3) configured to actuate the footrest (21) and the footrest supporter (22),
wherein the footrest actuator (3) comprises a supporter rotation actuator (32) configured to perform rotating movement of the footrest supporter (22), a footrest rotation actuator (33) configured to perform rotational movement of the footrest (21), and a translatory actuator (31), the translatory actuator (31) comprising a transfer mechanism (311) to which the footrest supporter (22) is connected so that the footrest actuator (3) can make translatory movement of the footrest supporter (22), and a transfer actuator (312) configured to apply an actuating force to the transfer mechanism (311), and
the seating-type gait rehabilitation robot further comprises an actuator hanging member (24) configured to hang and support the transfer mechanism (311), wherein the hanging member (24) comprises a lateral wall (241),
wherein the transfer mechanism (311) comprises a plurality of guide rails (311a) coupled to an inner side of the lateral wall (241) as spaced apart up and down from each other and installed as hung in a translatory direction, a slider (311b) connected to the plurality of guide rails (311a) and configured to move by the actuating force applied from the transfer actuator (312), and a transfer base (311c) on which the slider (311b) and the footrest supporter (22) are installed,
**characterized in that**
the seating-type gait rehabilitation robot further comprises a seat (13) connected to the elevator (12); and the transfer base (311c) comprises a vertical base (311c') to which the slider (311b) is coupled, and a horizontal base (311c") disposed perpendicularly to a lower portion of the vertical base (311c'), the footrest supporter (22) is rotatably coupled to the supporter rotation actuator (33) installed on the horizontal base (311c"), and
wherein the footrest supporter (22) comprises a first end connected to the transfer mechanism (211) and a second end to be mounted with the footrest (21), and the first end of the footrest supporter (22) coupled with the transfer mechanism (311) is placed inside an entry space so that the footrest (21) is disposed toward an entrance of the entry space formed between the actuator hanging members (24).

2. The seating-type gait rehabilitation robot of claim 1, wherein the transfer actuator (312) comprises:
a transfer belt (312a) comprising opposite ends fastened to the transfer base (311c), and installed to be movable along a disposition path of the guide rail (311a);
a transfer motor (312b) configured to generate and provide an actuating force for movement of the transfer belt (312a);
a transferer speed reducer (312c) connected to a motor shaft of the transfer motor (312b) and performing a speed-reducing function;
a transferer driving pulley (312d) installed in an output terminal of the transferer speed reducer (312c) and engaging with a first side of the transfer belt (312b); and
a transferrer driven pulley (312e) disposed spaced apart from the transferer driving pulley (312d) and engaging with a second side of the transfer belt (312a).

3. The seating-type gait rehabilitation robot of claim 1, wherein
the supporter rotation actuator (32) comprises a supporter rotation motor (321), and a supporter speed reducer (322) configured to reduce rotational speed of the supporter rotation motor (321), and
the footrest supporter (22) comprises a supporting link (221) connected to an output terminal of the supporter speed reducer (322), and the horizontal base (311c")is formed with a rotation hole in which a connector of the supporting link (221) is rotatable as accommodated.

4. The seating-type gait rehabilitation robot of any one of claims 1 to 3, further comprising:
a main base member (4) in which the actuator hanging member (24) is installed; and
a cover member (5) installed outside the actuator hanging member (24).

## Patentansprüche

1. Sitztyp-Gangrehabilitationsroboter, der folgende Merkmale aufweist:
einen Gewichtsträger (1), der einen Anheber (12) aufweist, der mit einem vertikalen Träger (11) verbunden ist und sich auf und ab bewegt; und
ein Paar von Gehbetätigungselementen (2), die an gegenüberliegenden Seiten in Bezug auf den Gewichtsträger (1) angeordnet sind, zum Gangtraining eines Trainierenden, wobei jedes des Paars von Gehbetätigungselementen (2) eine Fußstütze (21), einen Fußstützenträger (22), mit dem die Fußstütze (21) verbunden ist, und ein Fußstützenbetätigungselement (3) aufweist, das dazu konfiguriert ist, die Fußstütze (21) und den Fußstützenträger (22) zu betätigen,
wobei das Fußstützenbetätigungselement (3) ein Trägerdrehbetätigungselement (32), das dazu konfiguriert ist, eine Drehbewegung des Fußstützenträgers (22) auszuführen, ein Fußstützendrehbetätigungselement (33), das dazu konfiguriert ist, eine Drehbewegung der Fußstütze (21) auszuführen, und ein Translationsbetätigungselement (31) aufweist, wobei das Translationsbetätigungselement (31) einen Übertragungsmechanismus (311), mit dem der Fußstützenträger (22) verbunden ist, so dass das Fußstützenbetätigungselement (3) eine Translationsbewegung des Fußstützenträgers (22) ausführen kann, und ein Übertragungsbetätigungselement (312) aufweist, das dazu konfiguriert ist, eine Betätigungskraft auf den Übertragungsmechanismus (311) auszuüben, und
der Sitztyp-Gangrehabilitationsroboter ferner ein Betätigungselementhängeelement (24) aufweist, das dazu konfiguriert ist, den Übertragungsmechanismus (311) aufzuhängen und zu tragen, wobei das Hängeelement (24) eine Seitenwand (241) aufweist,
wobei der Übertragungsmechanismus (311) eine Mehrzahl von Führungsschienen (311a), die mit einer Innenseite der Seitenwand (241) gekoppelt sind, so dass sie voneinander nach oben und unten beabstandet sind, und so eingebaut sind, dass sie in einer Translationsrichtung hängen, einen Schieber (311b), der mit der Mehrzahl von Führungsschienen (311a) verbunden ist und dazu konfiguriert ist, sich durch die Betätigungskraft zu bewegen, die von dem Übertragungsbetätigungselement (312) ausgeübt wird, und eine Übertragungsbasis (311c) aufweist, an der der Schieber (311b) und der Fußstützenträger (22) eingebaut sind,
**dadurch gekennzeichnet, dass**
der Sitztyp-Gangrehabilitationsroboter ferner einen Sitz (13) aufweist, der mit dem Anheber (12) verbunden ist; und
die Übertragungsbasis (311c) eine vertikale Basis (311c'), mit der der Schieber (311b) gekoppelt ist, und eine horizontale Basis (311c") aufweist, die senkrecht zu einem unteren Abschnitt der vertikalen Basis (311c') angeordnet ist, wobei der Fußstützenträger (22) drehbar mit dem Trägerdrehbetätigungselement (33) gekoppelt ist, das an der horizontalen Basis (311c") eingebaut ist, und
wobei der Fußstützenträger (22) ein erstes Ende, das mit dem Übertragungsmechanismus (211) verbunden ist, und ein zweites Ende aufweist, das mit der Fußstütze (21) zu montieren ist, und das erste Ende des Fußstützenträgers (22), das mit dem Übertragungsmechanismus (311) gekoppelt ist, innerhalb eines Eintrittsraums platziert ist, so dass die Fußstütze (21) in Richtung eines Eingangs des Eintrittsraums angeordnet ist, der zwischen den Betätigungselementaufhängungselementen (24) gebildet ist.

2. Sitztyp-Gangrehabilitationsroboter gemäß Anspruch 1, wobei das Übertragungsbetätigungselement (312) folgende Merkmale aufweist:
einen Übertragungsriemen (312a), der gegenüberliegende Enden aufweist, die an der Übertragungsbasis (311c) befestigt sind, und so eingebaut ist, dass er entlang eines Anordnungswegs der Führungsschiene (311a) bewegbar ist;
einen Übertragungsmotor (312b), der dazu konfiguriert ist, eine Betätigungskraft für eine Bewegung des Übertragungsriemens (312a) zu erzeugen und bereitzustellen;
einen Übertragungsgeschwindigkeitsreduzierer (312c), der mit einer Motorwelle des Übertragungsmotors (312b) verbunden ist und eine Geschwindigkeitsreduzierungsfunktion ausführt;
eine Übertragungsantriebsriemenscheibe (312d), die in einem Ausgangsanschluss des Übertragungsgeschwindigkeitsreduzierers (312c) eingebaut ist und mit einer ersten Seite des Übertragungsriemens (312b) in Eingriff steht; und
eine Übertragungsabtriebsriemenscheibe (312e), die von der Übertragungsantriebsriemenscheibe (312d) beabstandet angeordnet ist und mit einer zweiten Seite des Übertragungsriemens (312a) in Eingriff steht.

3. Sitztyp-Gangrehabilitationsroboter gemäß Anspruch 1, wobei
das Trägerdrehbetätigungselement (32) einen Trägerdrehmotor (321) und einen Trägergeschwindigkeitsreduzierer (322) aufweist, der dazu konfiguriert ist, eine Drehgeschwindigkeit des Trägerdrehmotors (321) zu reduzieren, und
der Fußstützenträger (22) ein Trägerverbindungsglied (221) aufweist, das mit einem Ausgangsanschluss des Trägergeschwindigkeitsreduzierers (322) verbunden ist, und die horizontale Basis (311c") mit einem Drehloch gebildet ist, in dem ein Verbinder des Trägerverbindungsglieds (221) drehbar aufgenommen ist.

4. Sitztyp-Gangrehabilitationsroboter gemäß einem der Ansprüche 1 bis 3, der ferner folgende Merkmale aufweist:
ein Hauptbasiselement (4), in dem das Betätigungselementaufhängungselement (24) eingebaut ist; und
ein Abdeckelement (5), das außerhalb des Betätigungselementaufhängungselements (24) eingebaut ist.

## Revendications

1. Robot de rééducation à la démarche de type siège comprenant :
un support de poids (1) comprenant un élévateur (12) relié à un support vertical (11) et se déplaçant vers le haut et vers le bas ; et
une paire d'actionneurs de marche (2) disposés sur des côtés opposés par rapport au support de poids (1) pour l'entraînement à la démarche d'une personne s'entrainant, chacun de la paire d'actionneurs de marche (2) comprenant un repose-pied (21), un support de repose-pied (22) auquel le repose-pied (21) est relié, et un actionneur de repose-pied (3) configuré pour actionner le repose-pied (21) et le support de repose-pied (22),
dans lequel l'actionneur de repose-pied (3) comprend un actionneur de rotation de support (32) configuré pour effectuer un mouvement de rotation du support de repose-pied (22), un actionneur de rotation de repose-pied (33) configuré pour effectuer un mouvement de rotation du repose-pied (21), et un actionneur de translation (31), l'actionneur de translation (31) comprenant un mécanisme de transfert (311) auquel le support de repose-pied (22) est relié de sorte que l'actionneur de repose-pied (3) peut effectuer un mouvement de translation du support de repose-pied (22), et un actionneur de transfert (312) configuré pour appliquer une force d'actionnement au mécanisme de transfert (311), et
le robot de rééducation à la démarche de type siège comprend en outre un élément de suspension d'actionneur (24) configuré pour suspendre et supporter le mécanisme de transfert (311), dans lequel l'élément de suspension (24) comprend une paroi latérale (241),
dans lequel le mécanisme de transfert (311) comprend une pluralité de rails de guidage (311a) couplés à un côté interne de la paroi latérale (241) en étant espacés vers le haut et vers le bas les uns des autres et installés en étant suspendus dans une direction de translation, un coulisseau (311b) relié à la pluralité de rails de guidage (311a) et configuré pour se déplacer par la force d'actionnement appliquée par l'actionneur de transfert (312), et une base de transfert (311c) sur laquelle le coulisseau (311b) et le support de repose-pied (22) sont installés,
**caractérisé en ce que**
le robot de rééducation à la démarche de type siège comprend en outre un siège (13) relié à l'ascenseur (12) ; et
la base de transfert (311c) comprend une base verticale (311c') à laquelle le coulisseau (311b) est couplé, et une base horizontale (311c") disposée perpendiculairement à une partie inférieure de la base verticale (311c'), le support de repose-pied (22) est couplé en rotation à l'actionneur de rotation de support (33) installé sur la base horizontale (311c"), et
dans lequel le support de repose-pied (22) comprend une première extrémité reliée au mécanisme de transfert (211) et une seconde extrémité à monter avec le repose-pied (21), et la première extrémité du support de repose-pied (22) couplée au mécanisme de transfert (311) est placée à l'intérieur d'un espace d'entrée de sorte que le repose-pied (21) est disposé vers une entrée de l'espace d'entrée formé entre les éléments de suspension d'actionneur (24).

2. Robot de rééducation à la démarche de type siège selon la revendication 1, dans lequel l'actionneur de transfert (312) comprend :
une courroie de transfert (312a) comprenant des extrémités opposées fixées à la base de transfert (311c), et installée pour être mobile le long d'un chemin de disposition du rail de guidage (311a) ;
un moteur de transfert (312b) configuré pour générer et fournir une force d'actionnement pour le mouvement de la courroie de transfert (312a) ;
un réducteur de vitesse de transfert (312c) relié à un arbre de moteur du moteur de transfert (312b) et effectuant une fonction de réduction de vitesse ;
une poulie d'entraînement de transfert (312d) installée dans une borne de sortie du réducteur de vitesse de transfert (312c) et venant en prise avec un premier côté de la courroie de transfert (312b) ; et
une poulie entraînée de transfert (312e) disposée espacée de la poulie d'entraînement de transfert (312d) et venant en prise avec un second côté de la courroie de transfert (312a).

3. Robot de rééducation à la démarche de type siège selon la revendication 1, dans lequel
l'actionneur de rotation de support (32) comprend un moteur de rotation de support (321), et un réducteur de vitesse de support (322) configuré pour réduire la vitesse de rotation du moteur de rotation de support (321), et
le support de repose-pied (22) comprend une liaison de support (221) reliée à une borne de sortie du réducteur de vitesse de support (322), et la base horizontale (311c") est formée avec un trou de rotation dans lequel un connecteur de la liaison de support (221) peut tourner lorsqu'il est reçu.

4. Robot de rééducation à la démarche de type siège selon l'une quelconque des revendications 1 à 3, comprenant en outre :
un élément de base principal (4) dans lequel l'élément de suspension d'actionneur (24) est installé ; et
un élément de couvercle (5) installé à l'extérieur de l'élément de suspension d'actionneur (24).
